Europäisches Patentamt

European Patent Office

Office européen des brevets

(11) Numéro de publication: **0 146 183**
**B1**

(12) **FASCICULE DE BREVET EUROPEEN**

(45) Date de publication du fascicule du brevet:
**19.11.87**

(21) Numéro de dépôt: **84201807.9**

(22) Date de dépôt: **05.12.84**

(51) Int. Cl.⁴: **H 04 M 19/08**

(54) **Dispositif d'interface pour un poste telephonique.**

(30) Priorité: **14.12.83 FR 8320044**

(43) Date de publication de la demande:
**26.06.85 Bulletin 85/26**

(45) Mention de la délivrance du brevet:
**19.11.87 Bulletin 87/47**

(84) Etats contractants désignés:
**DE FR GB SE**

(56) Documents cités:
**EP - A - 0 023 682**
**DE - A - 3 209 181**
**FR - A - 2 282 198**
**FR - A - 2 465 384**
**FR - A - 2 526 183**

(73) Titulaire: **RTC-COMPELEC, 130, Avenue Ledru-Rollin,
F-75011 Paris (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB SE**

(72) Inventeur: **Coulmance Jean-Pierre SOCIETE CIVILE
S.P.I.D., 209, rue de l'Université, F-75007 Paris (FR)**

(74) Mandataire: **Caron, Jean et al, SOCIETE CIVILE
S.P.I.D. 209, rue de l'Université, F-75007 Paris (FR)**

## Description

L'invention concerne un dispositif électronique d'interface pour un poste téléphonique équipé d'un circuit intégré. Un tel circuit intégré qui remplit la plupart des fonctions de modulation dans le poste est alimenté par la ligne téléhonique. C'est pourquoi il est, en général, situé dans une diagonale d'un pont redresseur à lautre diagonale duquel est branchée la ligne téléphonique. Ce circuit intégré est pourvu d'au moins deux bornes, respectivement de modulation et de référence.

Des exemples de tels dispositifs d'interface sont fournis par les schémas d'application publiés avec les spécifications des circuits intégrés TEA 1046 ou TEA 1060, sous forme de fascicules spécifiques ou dans le manuel «Components for telephony» édités par la Société PHILIPS.

De nombreuses normes concernant le téléphone requièrent que le courant consommé sur la ligne quand le poste est décroché soit limité: un dispositif régulateur de courant à cet effet est décrit par exemple dans le document FR-A-2 282 198. Dans une variante moderne un circuit du même genre peut être constitué d'un premier transistor à effet de champ, branché en série avec une résistance de mesure de courant entre le circuit intégré et le pont redresseur, et d'un deuxième transistor dont la jonction émetteur-base est branchée en parallèle avec la résistance de mesure de courant, le collecteur étant relié à l'électrode de commande du premier transistor. Ce dispositif de base ne répond toutefois qu'en partie à ce que demandent les normes. On est donc amené à ajouter une quantité de circuits supplémentaires, chacun répondant à une exigence des normes.

L'objet de l'invention est de fournir, avec seulement quelques aménagements simples du dispositif de base, et sans adjonction de circuits fonctionnels supplémentaires, un dispositif qui répond à toutes les exigences des normes, qui est utilisable pour des circuits intégrés de toute origine et adaptable de manière simple à toute modification ultérieure des valeurs imposées par la norme.

Un montage selon l'invention est ainsi notamment remarquable en ce que l'électrode de commande du premier transistor à effet de champ, ou grille, et le collecteur du second transistor ensemble sont reliés par deux résistances de charge en série à la borne de modulation du circuit intégré, et en ce que le point commun des deux résistances de charge en série est relié à la borne de référence du circuit intégré par un condensateur de liaison.

Le circuit intégré étant connecté par sa borne de modulation, il est nécessaire qu'une tension alternative appliquée à ses bornes ne soit pas contrariée par le circuit de régulation de courant. Le circuit selon l'invention permet d'obtenir cet effet avec la plus grande simplicité.

Un perfectionnement du dispositif selon l'invention est remarquable en ce que la jonction base-émetteur du second transistor est shuntée par un condensateur de temporisation, en ce qu'une résistance est insérée entre la base de ce second transistor et la résistance de mesure de courant, en ce que cette dernière est costituée de deux résistances de mesure en série, et en ce qu'un troisième transistor est présent et a son émetteur, sa base et son collecteur respectivement reliés au pont redresseur, au point commun des deux résistances de mesure en série et au collecteur du deuxième transistor.

Ce dispositif diminue encore l'influence du circuit de régulation en courant alternatif tout en permettant d'obtenir de façon très simple que des surtensions transitoires appliquées sur la ligne ne provoquent pas de courants supérieurs à une valeur prédéterminée.

Un autre perfectionnement du dispositif est remarquable en ce que l'anode d'une diode Zener est connectée à la base du second transistor, la cathode étant reliée au point commun des deux résistances de charge en série.

Ce dispositif limite la puissance dissipée par le premier transistor en cas de surtension importante et de longue durée, pour un coût additionnel très faible.

La description qui va suivre, en regard des figures annexées, le tout donné à titre d'exemple non limitatif, permettra de bien comprendre comment l'invention peut être réalisée.

La figure 1 représente un schéma électrique du dispositif selon l'invention.

La figure 2 représente une variante du schéma de la figure 1.

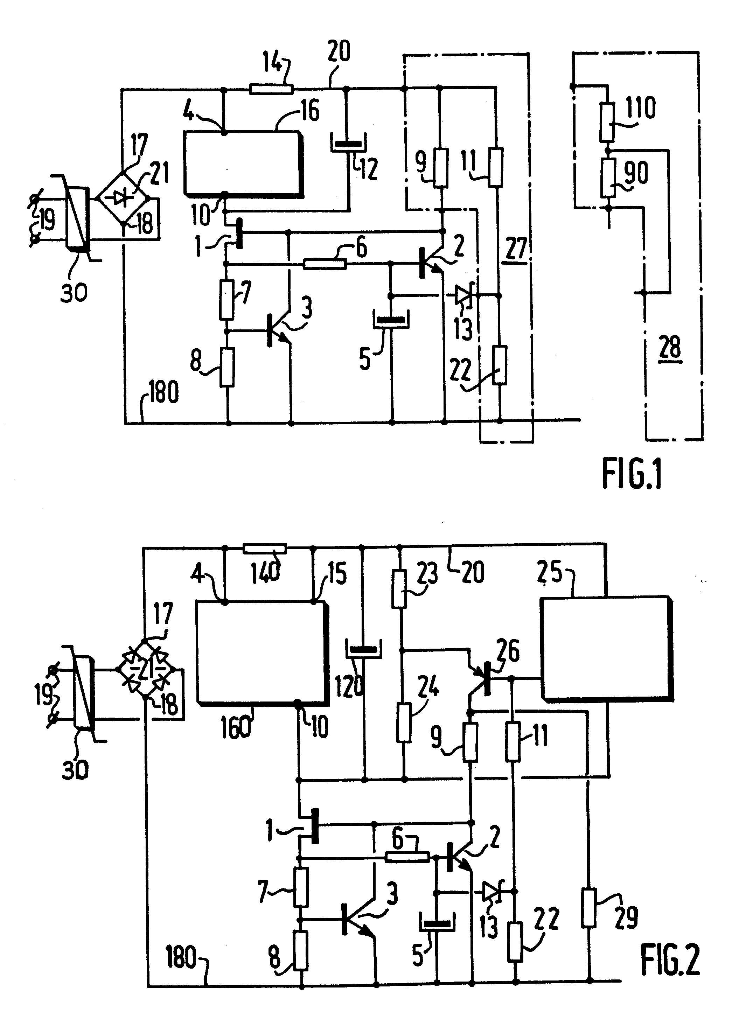

Sur la figure 1, la référence 16 désigne le circuit intégré et les références 4, 10 désignent respectivement les bornes de modulation et de référence.

Le circuit intégré 16 est situé dans une diagonale d'un pont redresseur 21 à l'autre diagonale duquel est branchée une ligne téléphonique 19.

Le circuit intégré, par exemple du modèle TEA 1046, construit par la Société PHILIPS, reçoit ou émet sur la ligne une modulation entre ses bornes de modulation 4 et de référence 10, et il est également alimenté en courant continu entre ces mêmes bornes. La borne de modulation est donc reliée à un fil de la ligne par la borne 17 du pont redresseur. La borne dite «de référence» pourrait fonctionnellement être reliée à l'autre fil de la ligne. Toutefois, du fait que le circuit intégré est prévu pour créer à ses bornes une tension fixe alors que la ligne présente, selon la norme française, une tension continue variable pour laquelle un courant constant inférieur à 60 mA doit être maintenu, le transistor 1 est ajouté en série dans le montage pour absorber les écarts de tension et assurer une régulation du courant.

Le montage comporte ainsi un dispositif d'interface constitué d'un premier transistor haute tension à effet de champ à canal N 1 dont le trajet principal de courant est placé en série avec une résistance de mesure de courant (constituée ici de deux résistances 7, 8), entre la borne de référence 10 du circuit intégré 16 et la connexion 180 reliée à la sortie négative 18 du pont redresseur 21, et d'un deuxième transistor bipolaire NPN 2 dont la jonction base-émetteur est branchée en parallèle avec la résistance de mesure de courant 7, 8 et dont le collecteur est relié à la grille du transistor à effet de champ 1. Ce dispositif classique fonctionne de la manière suivante: lorsque le courant de ligne, qui traverse les résistances 7, 8 dépasse une certaine valeur, par exemple 35 mA, la tension aux bornes de la résistance de mesure atteint environ 0,6 volt et le transistor 2 devient conducteur, ce qui fait baisser la tension sur la grille du transistor 1 et limite le courant.

La grille du transistor 1 et le collecteur du transistor 2 sont reliés ensemble par deux résistances de charge 9, 14 en série à la borne de modulation 4 du circuit intégré, et le point commun 20 de ces deux résistances est relié par un condensateur de liaison 12 à la borne de référence 10 du circuit intégré. En outre, la jonction émetteur-base du second transistor 2 est shuntée par un condensateur 5.

Le dispositif fonctionne de la façon suivante: le chemin de courant alternatif constitué par le condensateur 12 ramène, via la résistance 9, sur la grille du transistor 1, une tension de contre-réaction en courant alternatif seulement. Comme le transistor 2 a sa jonction base-émetteur shuntée par un condensateur, il ne peut délivrer qu'un courant continu et son impédance de sortie de collecteur est donc très grande en courant alternatif. La contre-réaction n'est donc pratiquement pas diminuée par la présence du transistor 2 en parallèle sur la grille du transistor 1, et il s'agit donc d'une contre-réaction totale. Celle-ci procure donc, en courant alternatif, une impédance dynamique du transistor à effet de champ égale à l'inverse de sa pente. Une valeur usuelle de 250 mA/V pour cette dernière conduit ainsi à une résistance dynamique de 4 ohms pour le transistor 1. Une telle résistance en série dans la ligne ne perturbe donc pas la modulation.

La norme française prévoit une tension d'alimentation variable pour laquelle un courant inférieur à 60 mA doit être maintenu. Elle prévoit également que le courant puisse atteindre 150 mA crête durant 150 mS, le courant devant revenir à moins de 60 mA en moins de 400 mS.

La contre-réaction assurant une impédance dynamique faible pour le transistor 1, en courant alternatif, une surtension transitoire rapide sur la ligne risque d'entraîner un courant transitoire trop important. La résistance de mesure de courant est alors constituée de deux résistances en série 7, 8 et un troisième transistor 3 est présent et a son émetteur, sa base et son collecteur respectivement reliés à la borne 18 du pont redresseur, au point commun des deux résistances de mesure 7, 8 en série et au collecteur du deuxième transistor 2. En régime normal, le transistor 3 est bloqué et n'intervient pas dans la contre-réaction décrite plus haut.

La valeur de la résistance 8 est calculée pour que le transistor 3 commence à conduire lorsque le courant de ligne approche de 150 mA. Ainsi, une des exigences de la norme est respectée. De plus, une résistance 6 est insérée entre la base du second transistor 2 et la résistance 7 de mesure de courant et cette résistance, associée au condensateur 5 de temporisation, introduit une constante de temps grâce à laquelle le transistor 2 peut entrer en action après une durée de temps prédéterminée pour ramener la limitation du courant à la valeur prévue en régime permanent, plus faible que celle assurée par la résistance 8 associée au troisième transistor 3. Ainsi, encore une autre exigence de la norme ets assurée très simplement.

Si une tension élevée est appliquée accidentellement sur la ligne pendant une durée assez longue, c'est aux bornes du transistor 1 que la tension se trouve appliquée pour la plus grande part. Malgré la limitation de courant, ce transistor dissipe alors une puissance élevée. Si, par exemple, le secteur alternatif à 220 volts est appliqué accidentellement sur la ligne, avec un courant limité à 35 mA par exemple, la puissance dissipée par le transistor 1 est supérieure à cinq watts...

Pour éviter d'avoir à introduire un agencement volumineux et cher pour évacuer les calories, l'anode d'une diode Zener 13 est connectée à la base du second transistor 2, la cathode étant reliée au point commun 20 des deux résistances de charge en série 9, 14. Ainsi, lorsque la tension sur la connexion 20 dépasse une tension de seuil, déterminée par le choix du modèle de diode Zener, un courant est amené sur la base du transistor 2 qui passe en saturation et bloque complètement le transistor 1. Afin d'éviter l'emploi d'une diode Zener à tension élevée, et pour limiter la puissance qu'elle dissipe, la cathode de ladite diode Zener est reliée au point commun des deux résistances, non pas directement, mais par l'intermédiaire d'un diviseur de tension constitué par les résistances 11 et 22, la tête du diviseur étant ainsi reliée à la connexion 20, sa prise intermédiaire étant connectée à la cathode de la diode, et son pied à la connexion 180. Une variante possible du circuit 27 (incluant les résistances 9, 11, 22) est représentée en 28. La résistance 9 est divisée en deux parties 90 et 110 et la cathode de la diode Zener est alors reliée directement au point commun des résistances 90 et 110, lesquelles constituent alors à la fois une résistance de charge pour le transistor 2 et le diviseur pour la diode Zener.

Le circuit intégré 16 utilisée dans la figure 1 est un modèle qui assure à lui seul les fonctions de modulation et celle de numérotation multifréquences. Dans le cas où l'on désire assurer une numérotation par impulsions, la variante du dispositif représentée par la figure 2 est avantageusement employée. Le circuit intégré référencé 160 est alors par exemple du modèle TEA 1060. Dans ce cas, les bornes de modulation 4 et d'alimentation 15 sont distinctes. Un schéma d'application du constructeur (PHILIPS) enseigne de réunir ces deux bornes entre elles par une résistance de terminaison de ligne 140 d'environ 600 ohms, et d'installer un condensateur-réservoir 120 entre la borne d'alimentation 15 et la borne de référence 10. Au lieu d'ajouter purement et simplement à ces éléments 140, 120 le dispositif de la figure 1, il est avantageux de combiner la résistance 14 de la figure 1 et la résistance 140 en une seule résistance 140, et de combiner le condensateur de liaison 12 de la figure 1 et le condensateur-réservoir 120 en un seul condensateur 120. Alors, la résistance 9 de la figure 1, qui porte le même numéro sur la figure 2, est reliée au point commun 20 de la résistance 140 et du condensateur 120. En outre, le chemin de courant principal d'un transistor de commutation PNP 26 est inséré dans la liaison du collecteur du deuxième transistor 2 vers le condensateur de liaison 120, entre la résistance de charge 9 et le point commun 20. Ce transistor est destiné à commander les impulsions de numérotation. Il est lui-même actionné par un circuit intégré spécifique 25, par exemple du type PCD 3325 (du même constructeur) qui engendre des tops de numérotation à partir d'un clavier à touches non représenté. Ce circuit est alimenté en parallèle avec le circuit TEA 1060 entre ses bornes 10 et 15. Pour assurer une polarisation convenable du transistor 26, son émetteur est relié au point milieu d'un diviseur fait de deux résistances 23, 24 reliées respectivement à la connexion 20 et à la borne 10. Cette disposition entraîne, en régime permanent, un décalage de quelques volts continus de la tension appliquée en tête de la résistance 9, qui est sans incidence sur le fonctionnement du dispositif. Lors d'une impulsion de numérotation, le circuit intégré 25 déclenche la coupure du transistor 26. Alors, du fait d'une résistance 29 placée entre la grille du transistor 1 et la connexion 180, quelque soit l'état du transistor 2, le transistor 1 est bloqué et le courant de ligne est interrompu (les circuits intégrés 16 et 25 restent alimentés par le condensateur-réservoir 120). Les autres éléments de la figure 2 sont identiques à ceux de la figure 1 et portent les mêmes références.

La Demanderesse a obtenu des résultats satisfaisants en employant les éléments suivants:

*Semiconducteurs:*

| | |
|---|---|
| 1: | 2 N 3008 ou 2 N 2408 |
| 2 et 3: | BC 547 |
| 13: | BZY 55 C 30 V |
| 25: | PCD 3325 |
| 26: | BF 423 |
| 16: | TEA 1046 |
| 160: | TEA 1060 |

*Résistances:*

| référence | valeur (ohms) |
|---|---|
| 7 | 10 |
| 8 | 6,8 |
| 9 | 1 M |
| 11 | 1 M |
| 14 | 5600 |
| 22 | 330 K |
| 23 | 5600 |
| 24 | 5600 |
| 29 | 1 M |
| 90 | 330 K |
| 110 | 1 M |
| 140 | 560 |

*Condensateurs:*

| référence | valeur (micro-farads) |
|---|---|
| 5 | 33 |
| 12 et 120 | 100 |

Le pont redresseur 21 et l'élément de protection 30 bien connus peuvent être d'un type quelconque adapté aux postes téléphoniques. Bien entendu, les circuits intégrés TEA 1060, TEA 1046 et PCD 3325 doivent être en outre entourés de nombreux éléments discrets non représentés ici pour assurer différentes fonctions telles que filtrage, liaison au microphone et à l'écouteur, etc. Ces éléments sont décrits en détail dans les notices des circuits intégrés concernés et restent inchangés dans le dispositif selon l'invention. De ce fait, ils n'ont pas besoin d'être décrits ici.

Il va de soi que de nombreux équivalents peuvent être substitués aux éléments décrits, par exemple des transistors MOS à la place de certains transistors bipolaires, un autre type d'élément à seuil à la place de la diode Zener, le positionnement de l'ensemble du dispositif entre la sortie positive du pont redresseur et le circuit intégré.

## Revendications

1. Dispositif électronique d'interface pour un poste téléphonique équipé d'un circuit intégré (16) situé dans une diagonale d'un pont redresseur (21) à l'autre diagonale duquel est branchée une ligne téléphonique, le circuit intégré (16) étant pourvu d'au moins une borne de modulation (4) et un borne de référence (10), dispositif constitué d'un premier transistor (1) à effet de champ, branché en série avec une résistance de mesure de courant (7, 8) entre le circuit intégré et le pont redresseur, et d'un deuxième transistor (2) dont la jonction émetteur-base est branchée en parallèle avec la résistance de mesure de courant, le collecteur étant relié à l'électrode de commande du premier transistor, caractérisé en ce que l'électrode du premier transistor (1) ou grille, et le collecteur du second transistor (2) ensemble sont reliés par deux résistances de charge en série (9, 14) à la borne de modulation (4) du circuit intégré, et en ce que le point commun (20) des deux résistances de charge en série est relié à la borne de référence (10) du circuit intégré (16) par un condensateur de liaison (12).

2. Dispositif selon la revendication 1, caractérisé en ce que la jonction base-émetteur du second transistor est shuntée par un condensateur de temporisation (5), en ce qu'une résistance (6) est insérée entre la base de ce second transistor et la résistance de mesure de courant, en ce que cette dernière est constituée de deux résistances de mesure en série (7, 8), et en ce qu'un troisième transistor (3) est présent et a son émetteur, sa base et son collecteur respectivement reliés au pont redresseur, au point commun des deux résistances de mesure en série, et au collecteur du deuxième transistor.

3. Dispositif selon l'une des revendications 1 ou 2, caractérisé en ce que l'anode d'une diode Zener (13) est connectée à la base du second transistor, la cathode étant reliée au point commum (20) des deux résistances de charge en série.

4. Dispositif selon la revendication 3, caractérisé en ce que la cathode de la diode Zener est reliée audit point commun par l'intermédiaire d'un pont diviseur de tention (11, 12, 110, 90).

5. Dispositif selon l'une quelconque des revendications précédentes, dans lequel le circuit intégré possède en outre une borne d'alimentation (15) distincte de la borne de modulation (4), une résistance (140) de terminaison de ligne étant branchée entre ces bornes, et un condensateur-réservoir (120) étant branché entre la borne d'alimentation et la borne de référence, caractérisé en ce que la résistance de terminaison de ligne constitue une des deux susdites résistances de charge en série, et en ce que le condensateur-réservoir constitue le susdit condensateur de liaison.

6. Dispositif selon la revendication 5, caractérisé en ce que le chemin de courant principal d'un transistor (26) de commutation est inséré dans la liaison du collecteur du deuxième transistor (2) vers le condensateur de liaison (120).

**Patentansprüche**

1. Elektronische Schnittstellenanordnung für eine Teilnehmersprechstelle mit einer integrierten Schaltung (16) in einer Diagonale einer Gleichrichterbrücke (21) mit deren anderer Diagonale eine Fernsprechleitung verbunden ist, wobei die integrierte Schaltung (16) wenigstens eine Modulationsklemme (4) aufweist sowie eine Bezugsklemme (10), wobei die Anordnung durch einen ersten Feldeffekttransistor (1) gebildet wird, der mit einem Strommesswiderstand (7, 8) zwischen der integrierten Schaltung und der Gleichrichterbrücke in Reihe liegt, sowie durch einen zweiten Transistor (2), dessen Emitter-Basis-Übergang parallel zu dem Strommesswiderstand geschaltet ist, wobei der Kollektor mit der Steuerelektrode des ersten Transistors verbunden ist, dadurch gekennzeichnet, dass das Gitter des ersten Transistors (1) und dem Kollektor des zweiten Transistors (2) zusammen über zwei reihengeschaltete Belastungswiderstände (9, 14) mit der Modulationsklemme (4) der integrierten Schaltung verbunden sind und dass der gemeinsame Punkt (20) der zweiten reihengeschalteten Belastungswiderstände über einen Kopplungskondensator (12) mit der Bezugsklemme (10) der integrierten Schaltung (16) verbunden ist.

2. Anordnung nach Anspruch 1, dadurch gekennzeichnet, dass der Basis-Emitter-Übergang des zweiten Transistors durch einen Verzögerungskondensator (5) überbrückt ist, dass zwischen der Basis dieses zweiten Transistors und dem Strommesswiderstand ein Widerstand (6) vorgesehen ist, dass dieser Strommesswiderstand durch zwei reihengeschaltete Widerstände (7, 8) gebildet ist und dass ein dritter Transistor (3) vorgesehen ist, dessen Emitter, Basis und Kollektor mit der Gleichrichterbrücke, dem gemeinsamen Punkt der zwei reihengeschalteten Messwiderstände bzw. dem Kollektor des dritten Transistors verbunden ist.

3. Anordnung nach einem der Ansprüche 1 oder 2, dadurch gekennzeichnet, dass die Anode einer Zener-Diode (13) mit der Basis des zweiten Transistors und die Kathode mit dem gemeinsamen Punkt (20) der zwei reihengeschalteten Belastungswiderstände verbunden ist.

4. Anordnung nach Anspruch 3, dadurch gekennzeichnet, dass die Kathode der Zener-Diode mittels einer Spannungsteilerbrücke (11, 12, 110, 90) mit dem genannten gemeinsamen Punkt verbunden ist.

5. Anordnung nach einem der vorstehenden Ansprüche, wobei die integrierte Schaltung ausserdem ausser der Modulationsklemme (4) eine Speiseklemme (15), einen Leitungsabschlusswiderstand (140) zwischen den genannten Klemmen und einen Speicherkondensator (120) zwischen der Speiseklemme und der Bezugsklemme aufweist, dadurch gekennzeichnet, dass der Leitungsabschlusswiderstand einen der zwei obengenannten reihengeschalteten Belastungswiderstände bildet und dass der Speicherkondensator den obengenannten Kopplungskondensator bildet.

6. Anordnung nach Anspruch 5, dadurch gekennzeichnet, dass die Hauptstromstrecke eines Schalttransistors (26) in der Verbindung von dem Kollektor des zweiten Transistors (2) zu dem Kopplungskondensator (120) liegt.

**Claims**

1. An electronic interface for a telephone set comprising an integrated circuit (16) provided in a diagonal of a rectifier bridge (21) to whose other diagonal the telephone line is connected, the integrated circuit (16) having at least a modulation terminal (4) and a reference terminal (10), the interface being formed by a first field-effet transistor (1) arranged in series with a current measuring resistor (7, 8) between the integrated circuit and the rectifier bridge, and a second transistor (2) whose emitter-base junction is arranged in parallel with the current measuring resistor, the collector being connected to the control electrode of the first transistor, characterized in that the electrode or grid of the first transistor (1) and the collector of the second transistor (2) are connected together via two series-arranged load resistors (9, 14) to the modulation terminal (4) of the integrated circuit, and that the junction (20) of the two series-arranged load resistors is connected to the reference terminal (10) of the integrated circuit (16) via a coupling capacitor (12).

2. An arrangement as claimed in Claim 1, characterized in that the base-emitter junction of the second transistor is shunted by a timing capacitor (5), that a resistor (6) is arranged between the base of this second transistor and the current measuring resistor, that the latter is formed by two series-arranged measuring resistors (7, 8), and that a third transistor (3) is provided which has its emitter, its base and its collector connected to the rectifier bridge, to the junction of the two series-arranged measuring resistors, and to a collector of the second transistor, respectively.

3. An arrangement as claimed in one of the Claims 1 or 2, characterized in that the anode of a Zener diode (13) is connected to the base of the second transistor, the cathode being connected to the junction (20) of the two series-arranged load resistors.

4. An arrangement as claimed in Claim 2, characterized in that the cathode of the Zener diode is connected to said junction via a voltage divider bridge (11, 12, 110, 90).

5. An arrangement as claimed in any one of the preceding Claims, in which the integrated circuit has inter alia a supply terminal (15) which is separate from the modulation terminal (4), a line terminating resistor (140) being connected between its terminals, and a storage capacitor (120) being connected between the supply terminal and the reference terminal, characterized in that the line terminating resistor constitutes one of the two above-mentioned series-arranged load resistors, and that the storage capacitor forms the above-mentioned coupling capacitor.

6. An arrangement as claimed in Claim 5, characterized in that the main current path of a switching transistor (26) is arranged in the connection from the collector of the second transistor (2) to the coupling capacitor (120).

FIG.1

FIG.2